# EUROPEAN PATENT SPECIFICATION

(11) **EP 0 701 672 B1**
(45) Date of publication and mention of the grant of the patent: **25.02.1998**
(21) Application number: 94917671.3
(22) Date of filing: 26.05.1994
(51) Int. Cl.: F17C 11/00, C10L 3/04, C04B 28/18

(54) **MONOLITHIC POROUS MASS FOR GAS VESSELS**
MONOLITHISCHE PORÖSE MASSE FÜR GASFLASCHEN
MASSE POREUSE MONOLITHIQUE POUR BOUTEILLES DE GAZ

(30) Priority: 04.06.1993 IT MI931177
(43) Date of publication of application: 20.03.1996
(73) Proprietor: S.I.A.D. SOCIETA' ITALIANA ACETILENE & DERIVATI S.P.A., I-24100 Bergamo (IT)
(72) Inventor: CALEGARI, Ferruccio, I-24100 Bergamo (IT)
(74) Representative: Bianchetti, Giuseppe
(86) International application number: EP9401721
(87) International publication number: WO9429640

(56) References cited:
- EP-A- 0 472 388
- WO-A-93/16011
- US-A- 4 765 458
- US-A- 5 308 696

## Description

The present invention relates to monolithic porous silico-calcium masses for gas vessels. In particular, the invention relates to monolithic porous masses free from asbestos for acetylene vessels, to a process for the preparation of said masses and to vessels, in particular cylinders, containing said masses.

It has long been known that acetylene, due to its thermodynamic characteristics which make it unstable under certain conditions of temperature and pressure, is stored and sold in cylinders, dissolved in particular solvents, usually acetone or dimethylformamide. In fact, the high solubility of said gas in the above mentioned solvents allows its handling with high safety. Acetone, or dimethylformamide, or solvents with similar properties, are normally absorbed on porous masses having a monolithic structure which completely fill the acetylene cylinder. One of the main purposes of the porous mass consists in stopping possible flashbacks which can develop downstream the cylinder and prevent decomposition phenomena of acetylene, initiated by external causes, such as localized overheating or others, inside the cylinder itself.

It is therefore of particular importance that said filling material be a thermal insulator without voids, cavities, interstices, which could initiate dangerous decomposition phenomena. On the other hand said mass must have high porosity in order to facilitate the absorption and the subsequent release of acetylene when it is being used. The material must moreover be incombustible, inert towards acetylene and its solvents, and light-weight, and with special mechanical strength properties, which make it almost unalterable, namely not prone to fissuring and disintegrating to powder over the course of years.

Very good results have been obtained with masses having silico-calcium composition, claimed in different patents, with the addition of binders, among which asbestos being particularly preferred, which impart to the whole a support skeleton with the twofold purpose of improving the strength and plasticity of the final mass and of maintaining the various constituents suspended in the fluid mixture, from the stage of preparation of the mixture till the stage of setting in the subsequent oven-baking stage.

The established toxicity and cancerogenic properties of asbestos has made necessary replacing it with other fibrous materials which exert the function of binder among the different components of the structural supporting mass as to give the mass itself the necessary mechanical characteristics.

Patent specification EP 0 056 645, in the name of N.I. Industries, describes an asbestos-free porous mass for acetylene cylinders, wherein asbestos is replaced by alkali-resistant glass fibres.

Patent specification EP 0 064 916, in the name of L'Air Liquide, describes asbestos-free porous masses wherein the problem of the stabilization of the mass in the lack of asbestos is overcome by using ultrafine synthetic silica. The toughness of the mass is further improved by adding non-reactive synthetic fibres of mineral or organic origin, such as aluminium silicate, or carbon fibres or aramidic fibres.

EP 0 262 031, in the name of L'Air Liquide, teaches the use of treated cellulose fibres, instead of the costly glass fibres.

US 4 765 458, in the name of N.I. Industries, claims an asbestos-free mass containing refractory carbon fibres as reinforcing material.

US 4 970 246, in the name of Coyne Cylinder Company, teaches the use of artificial fibres consisting of a mixture of aramidic and oxidized polyacrylonitrile fibres.

As above mentioned, the filling porous mass for gas vessels, and in particular for acetylene cylinders, must satisfy certain requirements, such as chemical inertness, structural stability and strength, as widely discussed in the prior art. Other than the mechanical characteristics, such as uniform pore distribution, lack of fractures, minimal volume shrinkage, the mass must also be endowed with low thermal conductivity, such as to stop possible flashbacks which can develop downstream the cylinder during gas release. The function of thermal insulator of the mass is also to prevent decomposition phenomena of acetylene inside the cylinder itself, due to, for example, localized overheating, facilitated by the formation of thermal bridges, because of the different thermal conductivity of the various components of the mass. To this end the reinforcing fibre has a critical role in giving the porous mass the necessary requirements.

It has now been found that the use of carbon fibres, endowed with particular physico-chemical characteristics, as reinforcing fibres in the preparation of the porous mass, allows to obtain masses having advantageous structural characteristics in terms of mechanical strength, low thermal and electrical conductivity.

It is an object of the present invention a monolithic porous mass free from asbestos containing synthetic inorganic carbon fibres as binder, characterized in that said fibres have low thermal conductivity, hydrophilic characteristics and have rough surface. In particular, the fibres according to the invention show:
a) a carbon content between 80 and 93% w/w;
b) thermal conductivity between 1 and 7 W/m.°K;
c) hydrophilic character; and
d) a surface which presents a particular rough pattern.

The dimension of the fibres is not critical for the scope of the present invention. In a preferred embodiment of the present invention, the fibres have a diameter between 3 and 12 micron and length between 2 and 20 mm, although good results may be obtained also with fibres having different diameter and length from those above indicated.

Carbon fibre content is equal or less than 12% by weight based on the dry porous mass.

The low thermal conductivity of carbon fibres utilized according to the present invention gives the mass a higher thermal homogeneity, since local heat conduction and creation of thermal bridges are avoided.

For comparison purposes, graphite carbon fibres have thermal conductivity higher than 20 W/m.°K.

The particular surface rough pattern of the fibres utilized according to the present invention allows a better clasping with the mass at the end of the drying stage, therefore increasing its strength.

One of the problems which normally is encountered during the preparation of the wet mixture of the porous material relates to the dispersion and homogenization of the fibres in the silico-calcium mass. The skilled technician is well aware of the difficulties encountered when asbestos is substituted with other fibres such as for example glass fibres. Water repellent property of glass fibres inevitably leads to the agglomeration of the fibres during the mixing stage of the various components. A non homogeneous mass, wherein fibres are gathered in "tufts" broken up by spaces without fibres, is obtained, therefore, due to external stresses, dangerous crackings can form in the time inside the mass itself.

The carbon fibre utilized in the present invention has marked hydrophilic characteristics so that, when added into water, it uniformly disperses and this uniformity remains until the completion of the process.

The preparation of the mass can be carried out according to conventional methods described in the prior art, as for example in the above cited patents.

According to the invention, the porous mass is prepared by mixing lime in water (slaking the lime) and, under stirring, adding inorganic synthetic carbon fibres, thickening agent, if any, and silica dioxide, preferably crystalline quartz powder.

Once it has become homogeneous, the mixture is loaded into the cylinders, then subjected to baking and final drying.

In certain preferred embodiments of the invention, the ratios of the ingredients are 1:1 - 1:1.3 in respect of calcium oxide and quartz powder.

The above cited ratios do not place limits, and a different combination of ingredients does not fall outside the scope of the present invention.

The dispersion and homogenization of the fibres in the mixture can be facilitated by optionally using dispersing and thickening agents as additives. Examples of said additives are derivatives of the cellulose, such as carboxymethylcellulose or hydroxypropylcellulose, polyesters, such as polyethylene glycols. Additives of the inorganic kind having thixotropic effect, which achieve the same result, can also be suggested.

In certain cases, particular thixotropic substances could suitably be used. Satisfying results are obtained with mineral substances, such as colloidal magnesium aluminosilicate, which, after been suitably dispersed in water, form a gel, thus providing very good thickening properties. Their percent amount, as calculated on the final dry product, is generally lower than 13% w/w.

The so obtained thickening avoids the separation of the components of the mixture and assures a homogeneous final composition of the porous mass.

These products, which essentially consist of hydrated magnesium aluminosilicates, have a composition which, in some aspects, is comparable with the one of silico-calcium mass and well amalgamate with the mass itself, giving homogeneous mixtures, which after baking, reach high consistency.

Compressive strength tests, carried out on specimens of the porous mass, prepared according to the present invention with the above defined carbon fibres, gave particularly high values, to the order of 35-50 kg/cm². These values are hardly reached by other porous masses of similar constitution, but with different fibres as binder.

A typical preparation process according to the invention comprises the steps of:
a) treatment of calcium oxide with water, at a temperature between 20 and 60°C;
b) addition of synthetic inorganic carbon fibres and subsequent homogenization;
c) optional addition of a viscosity stabilizing agent;
d) addition of crystalline quartz powder;
e) stirring till thorough mixing;
f) filling the cylinders with said wet mixture;
g) baking the mass contained in the cylinders at 170-200°C under vapour pressure (autoclaving);
h) final drying at 280°C;
wherein the steps b), c) and d) can be carried out also in different sequence.

The following examples further illustrate the invention.

### Example 1

In a mixer provided with a multi-speed helical stirrer kg 12.7 of quicklime, with a size lower than 6 mm, were slaked in 70 kg of water at a temperature of 20°C, with slow stirring. After 20 minutes other 30 kg of water were added and hydration was continued for a further hour.

Thereafter 1.2 kg of inorganic synthetic carbon fibres Carbocem^{(R)} by RK Fibres Ltd, having fibre length of 3 mm were added slowly and at small portions, and the mixture was homogenised for 15 minutes at higher speed. Then the mixture was completed by adding, constantly under stirring, 100 g of an additive to uniform the viscosity and 14.8 kg of crystalline quartz powder.

After a further two hours, the very fluid and homogeneous mixture could be introduced directly into the cylinders which were immediately submitted to the subsequent baking stage under pressure, at a temperature of 180°C (autoclaving).

After drying at 280°C the obtained mass resulted homogeneous with a density of 266 g/litre and a porosity of 91.4%.

The compressive strength was between 30 and 45 kg/cm².

### Example 2

First, the milk of lime was prepared in accordance with the procedure illustrated in Example 1, by slaking 13.1 kg of quicklime in 103.2 kg of water at a temperature of 40°C with stirring at a rate of 50 rpm. Thereafter, 1.71 kg of inorganic synthetic carbon fibres Carbocem^{(R)}, having fibre length of 13 mm were added slowly in small portions, followed by 16.2 kg of quartz crystalline powder.

The stirring was continued at high speed (150 rpm), until the mixture was homogeneous. The operation in total required about 3 hours.

The porous mass obtained after the baking stage, as illustrated in Example 1, had a density of 277 g/litre and a porosity of 89.5%; the fibre resulted perfectly distributed into the mass, whose compressive strength was about 40-50 kg/cm².

## Claims

1. Monolithic porous silico-calcium mass free from asbestos for filling gas vessels containing synthetic inorganic carbon fibre having a carbon content between 80 and 93% as binder, characterized in that said carbon fibres have a thermal conductivity between 1 and 7 W/m.°K, are hydrophilic and have a rough surface, and the amount of said inorganic synthetic carbon fibres is less than or equal to 12% by weight, calculated on the dry mass.

2. Porous mass according to claim 1, characterized in that said synthetic inorganic carbon fibres have a length between 2 and 20 mm.

3. Porous mass according to claims 1-2, characterized in that it contains a viscosity stabilizing agent.

4. A process for the preparation of the porous mass of claims 1-3, characterized by the following stages:
a) treatment of calcium oxide with water, at a temperature between 20 and 60°C;
b) addition of synthetic inorganic carbon fibres and subsequent homogenization;
c) optional addition of a viscosity stabilizing agent;
d) addition of crystalline quartz powder;
e) stirring until thorough mixture;
f) filling the cylinders with said wet mixture;
g) baking the mass contained in the cylinders at 170-200°C under vapour pressure (autoclaving);
h) final drying at 280°C;
wherein the stages b), c) and d) can be carried out also in different sequences.

5. A process according to claim 4 characterized in that the ratio of calcium oxide to crystalline quartz powder is between 1:1 and 1:1.3 and the ratio of crystalline quartz powder to water is between 1:6 and 1:7.5.

6. Gas vessels characterized in that they contain the monolithic porous silico-calcium mass of claims 1-3.

7. Acetylene cylinders characterized in that they contain the monolithic porous silico-calcium mass of claims 1-3.

## Patentansprüche

1. Asbestfreie, monolithische poröse Calciumsilikat-Masse zur Füllung von Gasbehältern, enthaltend synthetische, anorganische Kohlenstoff-Fasern als Bindemittel, mit einem Kohlenstoffgehalt zwischen 80 und 93%, **dadurch gekennzeichnet,** daß die Kohlenstoff-Fasern eine Wärmeleitfähigkeit zwischen 1 und 7 W/m°H aufweisen, hydrophil sind und eine rauhe Oberfläche aufweisen, und daß die Menge an anorganischen, synthetischen Kohlenstoff-Fasern weniger oder gleich 12 Gew.% bezogen auf die Trockenmasse ist.

2. Poröse Masse nach Anspruch 1, **dadurch gekennzeichnet,** daß die synthetischen, anorganischen Kohlenstoff-Fasern eine Länge zwischen 2 und 20 mm aufweisen.

3. Poröse Masse nach Anspruch 1 oder 2, **dadurch gekennzeichnet,** daß sie ein Viskositätsstabilisierungsmittel enthält.

4. Verfahren zur Herstellung der porösen Masse nach den Ansprüchen 1 - 3, **gekennzeichnet durch** folgende Stufen:
a) Behandlung von Calciumoxid mit Wasser bei einer Temperatur zwischen 20 und 60°C;
b) Zusatz von synthetischen, anorganischen Kohlenstoff-Fasern und anschließende Homogenisation;
c) wahlweise Zugabe eines Viskositätsstabilisierungsmittels;
d) Zugabe von kristallinem Quarzpulver;
e) Umrühren bis zur gründlichen Mischung;
f) Füllen der Zylinder mit dieser feuchten Mischung;
g) Backen der in den Zylindern enthaltenen Masse bei 170 bis 200°C unter Dampfdruck (Autoklavieren);
h) endgültige Trocknung bei 280°C;
wobei die Stufen b), c) und d) auch in verschiedener Folge durchgeführt werden können.

5. Verfahren nach Anspruch 4, **dadurch gekennzeichnet,** daß das Verhältnis von Calciumoxid zu kristallinem Quarzpulver zwischen 1 : 1 und 1:1,3 und das Verhältnis von kristallinem Quarzpulver zu Wasser zwischen 1 : 6 und 1 : 7,5 ist.

6. Gasbehälter, **dadurch gekennzeichnet,** daß sie die monolithische poröse Calciumsilikat-Masse gemäß den Ansprüchen 1 - 3 enthalten.

7. Acetylenzylinder, **dadurch gekennzeichnet,** daß sie die monolithische poröse Calciumsilikat-Masse gemäß den Ansprüchen 1 - 3 enthalten.

## Revendications

1. Masse silico-calcique poreuse monolithique exempte d'amiante pour remplir des récipients à gaz, contenant une fibre de carbone inorganique synthétique ayant une teneur en carbone entre 80 et 93 % en tant que liant, caractérisée en ce que lesdites fibres de carbone ont une conductivité thermique entre 1 et 7 W/m.⁺K, sont hydrophiles et ont une surface rugueuse, et la proportion desdites fibres de carbone synthétiques inorganiques est inférieure ou égale à 12 % en poids, calculée sur la masse sèche.

2. Masse poreuse selon la revendication 1, caractérisée en ce que lesdites fibres de carbone inorganiques synthétiques ont une longueur entre 2 et 20 mm.

3. Masse poreuse selon les revendications 1 - 2, caractérisée en ce qu'elle contient un agent stabilisant la viscosité.

4. Procédé pour la préparation de la masse poreuse des revendications 1 - 3, caractérisé par les étapes suivantes :
a) traitement d'oxyde de calcium avec de l'eau, à une température entre 20 et 60°C ;
b) addition de fibres de carbone inorganiques synthétiques et homogénéisation subséquente ;
c) addition facultative d'un agent stabilisant la viscosité ;
d) addition de poudre de quartz cristalline ;
e) agitation jusqu'à ce que le mélange soit parfait ;
f) remplissage des bouteilles avec ledit mélange humide ;
g) cuisson de la masse contenue dans les bouteilles à 170 à 200°C sous une pression de vapeur (autoclavage) ;
h) séchage final à 280°C ;
dans lequel les stades b), c) et d) peuvent aussi être effectués dans des séquences différentes.

5. Procédé selon la revendication 4, caractérisé en ce que le rapport de l'oxyde de calcium à la poudre de quartz cristalline est entre 1:1 et 1:1,3, et le rapport de la poudre de quartz cristalline à l'eau est entre 1:6 et 1:7,5.

6. Récipients à gaz caractérisés en ce qu'ils contiennent la masse silico-calcique poreuse monolithique des revendications 1 - 3.

7. Bouteilles d'acétylène caractérisées en ce qu'elles contiennent la masse silico-calcique poreuse monolithique des revendications 1 - 3.
